# FASCICULE DE BREVET EUROPEEN

(11) **EP 4 339 099 B1**
(45) Date de publication et mention de la délivrance du brevet: **25.06.2025**
(21) Numéro de dépôt: 23196315.8
(22) Date de dépôt: 08.09.2023
(51) Int. Cl.: B64C 25/40, F16H 1/28

(54) **RÉDUCTEUR DE VITESSE POUR UN DISPOSITIF D'ENTRAÎNEMENT D'UNE ROUE D'UN TRAIN D'ATTERRISSAGE D'AÉRONEF**
UNTERSETZUNGSGETRIEBE FÜR EINE ANTRIEBSVORRICHTUNG EINES RADES EINES FLUGZEUGFAHRWERKS
SPEED REDUCER FOR A DEVICE FOR DRIVING A WHEEL OF AN AIRCRAFT LANDING GEAR

(30) Priorité: 16.09.2022 FR 2209339
(43) Date de publication de la demande: 20.03.2024
(73) Titulaire: Safran Transmission Systems, 92700 Colombes (FR)
(72) Inventeur: FERNANDEZ, Maxime, 77550 MOISSY-CRAMAYEL (FR); FRANCOIS, Loïc, 77550 MOISSY-CRAMAYEL (FR); MORELLI, Boris Pierre Marcel, 77550 MOISSY-CRAMAYEL (FR); PELTIER, Jordane Emile André, 77550 MOISSY-CRAMAYEL (FR)
(74) Mandataire: Gevers & Orès

(56) Documents cités:
- FR-A1- 3 022 858
- US-A- 3 711 043
- US-A1- 2019 291 575

## Description

### Domaine technique de l'invention

La présente invention concerne un réducteur mécanique de vitesse ainsi qu'un dispositif d'entraînement d'au moins une roue d'un train d'atterrissage d'aéronef comportant un tel réducteur.

### Arrière-plan technique

L'arrière-plan technique comprend notamment les documents FR-A1-3 022 858, US-A1-2019/191575 et US-A1-3,711,043.

Un aéronef comprend des trains d'atterrissage équipés de roues pour les déplacements de l'aéronef au sol sur un tarmac. Ce roulage aussi appelé taxiage (de l'anglais taxiing) peut être obtenu en propulsant l'aéronef grâce à ses turbomachines.

Pour limiter la consommation de carburant et l'impact sur l'environnement, il est connu de réaliser ce taxiage de manière électrique. Le taxiage électrique est obtenu en entraînant les roues d'un train d'atterrissage par un moteur électrique.

La présente demande propose un perfectionnement aux technologies existantes et concerne ainsi un dispositif à moteur électrique pour l'entraînement d'au moins une roue d'un train d'atterrissage d'aéronef.

Une solution consistant à utiliser un réducteur mécanique pour transmettre la puissance d'un moteur électrique à une roue d'un train d'atterrissage a été proposée par la Demanderesse dans le document EP-A1-3 882 136.

Le rôle d'un réducteur mécanique est de modifier le rapport de vitesse et de couple entre l'axe d'entrée et l'axe de sortie d'un système mécanique.

Dans le domaine éloigné des turbomachines d'aéronef, il est connu d'utiliser un réducteur mécanique pour assurer une transmission de puissance entre deux arbres mécaniques rotatifs.

Il existe de nombreux types de réducteurs par exemple différentiels, planétaires, épicycloïdaux, à lignes intermédiaires, à étages de réduction en série, etc.

Dans l'état de l'art des turbomachines à double flux, les réducteurs sont de type planétaire ou épicycloïdal. Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différents équirépartis sur le même diamètre de fonctionnement autour de l'axe des planétaires. Ces axes sont parallèles à l'axe longitudinal de la turbomachine.

Il existe plusieurs architectures de réducteur. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Dans la présente demande, on entend par « étage » ou « denture », au moins une série de dents d'engrènement avec au moins une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère en général avec la couronne.

Un réducteur à double étage d'engrènement présente l'avantage d'avoir un rapport de réduction plus important qu'un réducteur à simple étage d'engrènement de même encombrement.

Dans le cadre d'un dispositif d'entraînement d'au moins une roue d'un train d'atterrissage, l'utilisation d'un moteur électrique et d'un réducteur pour l'entraînement de la roue génère de fortes contraintes d'encombrement. Le diamètre extérieur du réducteur est limité par la dimension de la jante de la roue, et le diamètre intérieur du réducteur est fortement contraint par le diamètre du moyeu de la roue. De plus, l'utilisation d'un moteur électrique tournant généralement à des vitesses élevées nécessite l'utilisation d'un réducteur proposant un grand rapport de réduction afin de proposer une vitesse de sortie qui correspond à la faible vitesse de rotation de la roue. Les trains de type épicycloïdal et planétaire de la technique actuelle ne permettent pas d'obtenir ces niveaux de réduction dans un encombrement aussi restreint.

L'invention propose une solution à au moins une partie de ces problèmes, qui est simple, efficace et économique.

### Résumé de l'invention

L'invention concerne un réducteur mécanique de vitesse, en particulier pour un dispositif d'entraînement d'au moins une roue d'un train d'atterrissage d'aéronef, ce réducteur comportant :
- un premier solaire mobile en rotation autour d'un axe X et comportant une denture externe,
- des premiers satellites répartis autour de l'axe X et engrenés avec la denture externe du premier solaire, ces premiers satellites étant mobiles en rotation autour d'axes Y parallèles à l'axe X et étant portés par un premier porte-satellites mobile en rotation autour de l'axe X,
- une couronne fixe engrenée avec les satellites,
caractérisé en ce qu'il comprend en outre :
- des seconds satellites répartis autour de l'axe X et engrenés avec une couronne et avec une denture externe dudit premier porte-satellites, ces seconds satellites étant mobiles en rotation autour d'axes Z parallèles à l'axe X et étant portés par un second porte-satellites mobile en rotation autour de l'axe X.

L'invention propose ainsi un réducteur à double train épicycloïdal. Un premier train épicycloïdal est formé par le premier solaire, les premiers satellites portés par le premier porte-satellites et la couronne. Un second train épicycloïdal est formé par le premier porte-satellites qui forme un second solaire, les seconds satellites portés par le second porte-satellites, et la couronne. On comprend donc qu'il y a un élément en commun aux deux trains épicycloïdaux et qui assurent le lien entre ces deux trains, il s'agit du premier porte-satellites pour le premier train et le second solaire pour le second train. En pratique, cela peut revenir à équiper le premier porte-satellites avec une denture externe de pignon qui est centrée sur l'axe X et qui peut engrener avec les dentures des seconds satellites. Les couronnes du premier et second trains peuvent être communes ou différentes.

Le réducteur comprend ainsi le premier solaire qui forme l'entrée du réducteur et le second porte-satellites qui forme la sortie du réducteur. La ou les couronnes est/sont fixe(s).

Les satellites sont avantageusement du type à double étage et comprennent ainsi des dentures indépendantes pour l'engrènement avec le solaire et la couronne. Le réducteur est alors dans ce cas du type à double train épicycloïdal et double étage.

Le réducteur selon l'invention a un grand rapport de réduction par rapport aux réducteurs de la technique antérieure, grâce à son double train épicycloïdal.

L'invention est compatible d'un réducteur à plusieurs étages comme évoqué dans ce qui précède. Elle est également compatible d'un réducteur dont le porte-satellites est mobile en rotation comme les réducteurs épicycloïdaux ou différentiels. Elle est également compatible avec des dentures de n'importe quel type (droites, hélicoïdales, chevrons, etc.). L'invention est en outre compatible avec un porte-satellites de type monobloc ou de type cage et porte-cage. Ces différents types de réducteur sont bien connus de l'homme du métier. La solution proposée ci-dessous est compatible de tout type de palier satellite, qu'il soit composé d'éléments roulants, d'un palier hydrodynamique, etc.

Selon la revendication 1, le réducteur comprend les caractéristiques suivantes:
- les premiers satellites comportent chacun une première denture externe engrenée avec la denture externe du premier solaire, et une seconde denture externe engrenée avec une première denture interne d'une première couronne ;
- les première et seconde dentures de chacun des premiers satellites ont des diamètres différents et/ou des nombres de dents différents ;
- les seconds satellites comportent chacun une première denture externe engrenée avec la denture externe du premier porte-satellites ;
- les seconds satellites comportent chacun une seconde denture externe engrenée avec une seconde denture interne de ladite première couronne ;
- les première et seconde dentures de chacun des seconds satellites ont des diamètres différents et/ou des nombres de dents différents.

En outre, le réducteur selon l'invention peut comprendre une ou plusieurs des caractéristiques suivantes, prises isolément les unes des autres, ou en combinaison les unes avec les autres :
- les axes Y sont situés sur une première circonférence et les axes Z sont situés sur une seconde circonférence, les première et seconde circonférences ayant des diamètres différents ;

- les axes Y sont situés sur une première circonférence et les axes Z sont situés sur une seconde circonférence, les première et seconde circonférences ayant des diamètres identiques ;
- le nombre de premiers satellites est égal au nombre de seconds satellites ;
- le nombre de premiers satellites est différent du nombre de seconds satellites ;
- les dentures des premiers et seconds satellites sont en chevron et les dentures de la ou des couronne(s) sont en hélice ;
- les premiers et seconds satellites sont guidés en rotation par des paliers qui sont situés aux extrémités longitudinales des satellites ou radialement à l'intérieur des dentures de ces satellites.

La présente invention concerne encore un dispositif d'entraînement d'au moins une roue d'un train d'atterrissage d'aéronef, ce dispositif comportant :
- au moins une roue de train d'atterrissage, cette roue comportant une jante ayant un axe de rotation,
- un moteur électrique comportant un arbre,
- un système de transmission mécanique entre l'arbre du moteur et la jante, ce système de transmission mécanique comprenant un réducteur mécanique de vitesse tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une roue d'un train d'atterrissage d'aéronef et d'un dispositif d'entraînement de cette roue,
[Fig.2] la figure 2 est une vue partielle en coupe axiale d'un réducteur mécanique,
[Fig.3] la figure 3 est une autre vue partielle en coupe axiale d'un réducteur mécanique,
[Fig.4] la figure 4 est une vue schématique en coupe axiale d'un réducteur selon un mode de réalisation de l'invention,
[Fig.5] la figure 5 est une vue schématique en coupe axiale d'un dispositif d'entraînement d'une roue d'un train d'atterrissage d'aéronef, ce dispositif comportant le réducteur de la figure 4 ;
[Fig.6] la figure 6 est une vue schématique en coupe axiale d'un dispositif d'entraînement d'une roue d'un train d'atterrissage d'aéronef, ce dispositif comportant un réducteur selon une variante de réalisation de l'invention,
[Fig.7a-7b] les figures 7a et 7b sont des vues schématiques, respectivement en perspective et en transparence d'une part, et en coupe axiale d'autre part, d'une autre variante de réalisation du réducteur selon l'invention ;
[Fig.8] la figure 8 est une vue schématique en coupe axiale d'un satellite et de paliers de guidage de ce satellite ; et
[Fig.9] la figure 9 est vue schématique en coupe axiale d'un satellite et de paliers de guidage de ce satellite.

### Description détaillée de l'invention

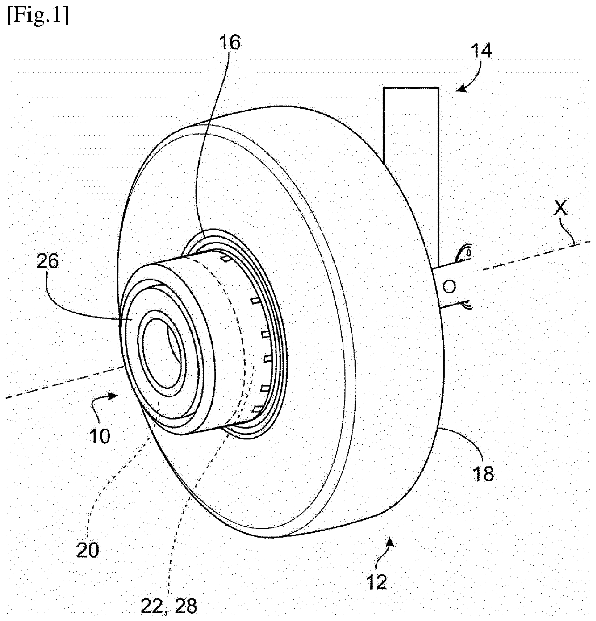

La figure 1 montre un dispositif 10 d'entraînement d'au moins une roue 12 d'un train d'atterrissage 14 d'aéronef.

La roue 12 comporte une jante 16 qui a un axe de rotation X. De manière classique, cette jante 16 a une forme générale tubulaire ou de disque et porte à sa périphérie un pneu 18.

Le dispositif 10 comprend un moteur électrique 20 et un système de transmission mécanique 22 entre un arbre du moteur 20 et la jante 16 de la roue 12.

Dans l'exemple représenté, le moteur 20 et le système 22 ont chacun une forme générale annulaire et sont centrés sur l'axe X. Ils sont disposés à côté l'un de l'autre et le système 22 est installé entre le moteur 20 et la jante 16. Une partie du système 22, voire également une partie du moteur 20, pourraient être logées dans la jante 16 pour réduire l'encombrement du dispositif 10. Le moteur 20 et le système 22 peuvent être protégés par un capot cylindrique extérieur 26 en saillie sur un côté de la jante 16 ou du pneu 18.

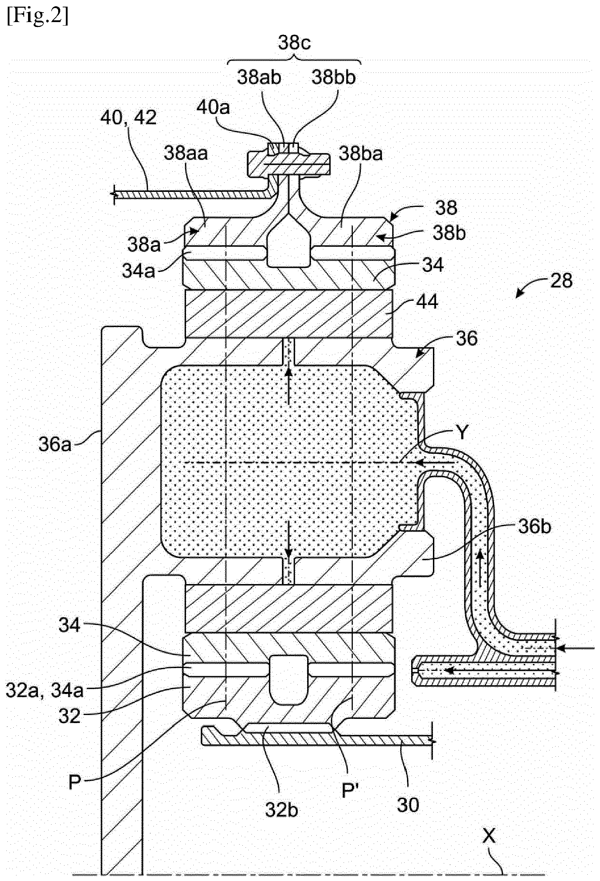

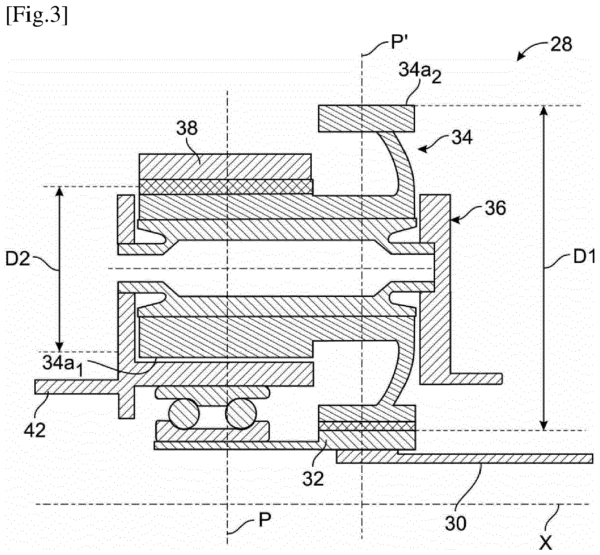

Le système de transmission mécanique 22 comprend un réducteur mécanique de vitesse 28 dont des exemples de réalisation sont illustrés aux figures 2 et 3.

La figure 2 montre un réducteur épicycloïdal 28. En entrée, le réducteur 28 est relié à un arbre 30, par exemple par l'intermédiaire de cannelures internes 32b. Ainsi, l'arbre 30 entraîne un pignon planétaire appelé le solaire 32. Classiquement, le solaire 32 entraîne une série de pignons appelés satellites 34, qui sont équirépartis sur le même diamètre autour de l'axe X de rotation du solaire 32. Ce diamètre est égal au double de l'entraxe de fonctionnement entre le solaire 32 et les satellites 34. Le nombre de satellites 34 est généralement défini entre trois et sept.

L'ensemble des satellites 34 est maintenu par un châssis appelé porte-satellites 36. Chaque satellite 34 tourne autour de son propre axe Y, et engrène avec une couronne 38.

En sortie nous avons :
▪ Dans cette configuration épicycloïdale, l'ensemble des satellites 34 entraine en rotation le porte-satellite 36 autour de l'axe X. La couronne 38 est fixée à un stator via un porte-couronne 40 et le porte-satellites 36 est fixé à autre arbre 42.
▪ Dans une autre configuration planétaire, l'ensemble des satellites 34 est maintenu par un porte-satellites 36 qui est fixé à un stator. Chaque satellite entraine la couronne 38 qui est reliée à l'arbre 42 via un porte-couronne 40.
▪ Dans une autre configuration différentielle, l'ensemble des satellites 34 est maintenu par un porte-satellites 36 qui est relié à l'arbre 30. Chaque satellite 34 entraine la couronne 38 qui est rapportée à l'arbre 42 via un porte-couronne 40.

Chaque satellite 34 est monté libre en rotation à l'aide d'un palier 44, par exemple de type roulement ou palier hydrodynamique. Chaque palier 44 est monté sur un des axes 36b du porte-satellites 36 et tous les axes 36b sont positionnés les uns par rapport aux autres à l'aide d'un ou plusieurs châssis structurels 36a du porte-satellites 36. Il existe un nombre d'axes 36b et de paliers 44 égal au nombre de satellites 34. Pour des raisons de fonctionnement, de montage, de fabrication, de contrôle, de réparation ou de rechange, les axes 36b et le châssis 36a peuvent être séparés en plusieurs pièces.

Pour les mêmes raisons citées précédemment, la denture 34a d'un satellite 34 peut être séparée en plusieurs hélices ou dents présentant chacun un plan médian P, P'. Dans l'exemple représenté, chaque satellite 34 comprend deux séries de dents en chevron coopérant avec une couronne 38 séparée en deux demi-couronnes :
▪ Un anneau amont 38a constituée d'une jante 38aa et d'une demi-bride de fixation 38ab. Sur la jante 38aa se trouve l'hélice avant engrenée avec une hélice de la denture 34a de chaque satellite 34. L'hélice de la denture 34a engrène également avec celle du solaire 32.
▪ Un anneau aval 38b constituée d'une jante 38ba et d'une demi-bride de fixation 38bb. Sur la jante 38ba se trouve l'hélice arrière engrenée avec une hélice de la denture 34a de chaque satellite 34. L'hélice de la denture 34a engrène également avec celle du solaire 32.

Si les largeurs d'hélice varient entre le solaire 32, les satellites 34 et la couronne 38 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 34a de chaque satellite 34 coopère à la fois avec le solaire 32 et la couronne 38. Même si la denture 34a comprend deux séries de dents, ces dents ont le même diamètre moyen et forment une seule et même denture appelée chevron.

La demi-bride de fixation 38ab de l'anneau amont 38a et la demi-bride de fixation 38bb de l'anneau aval 38b forment la bride de fixation 38c de la couronne. La couronne 38 est fixée au porte-couronne 40 en assemblant la bride de fixation 38c de la couronne 38 et une bride de fixation 40a du porte-couronne 40 à l'aide d'un montage boulonné par exemple.

La figure 3 montre un autre exemple d'architecture de réducteur, dit à double étage d'engrènement, dans lequel chaque satellite 34 comprend deux dentures 34a1, 34a2 distinctes configurées pour coopérer respectivement avec la couronne 38 et le solaire 32.

Dans cette figure 3, les éléments déjà décrits dans ce qui précède sont désignés par les mêmes références.

La denture 34a1 d'engrènement avec la couronne 38 un diamètre moyen noté D2 et est situé dans un plan médian P. La denture 34a2 d'engrènement avec le solaire 32 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 34a1, 34a2 comprend ici une seule hélice.

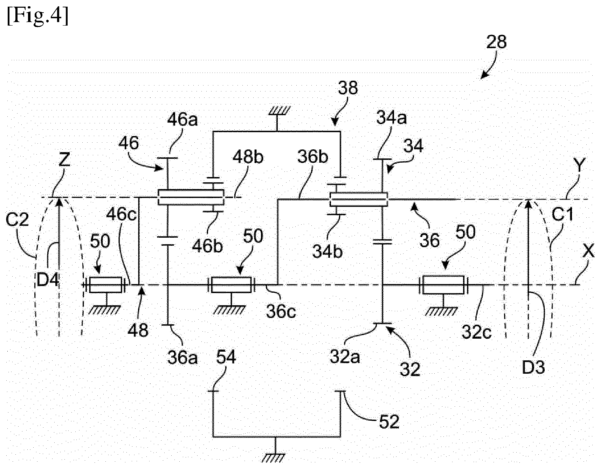

La figure 4 montre un premier mode de réalisation d'un réducteur mécanique de vitesse 28 selon l'invention qui a la particularité d'être à double train épicycloïdal.

Le réducteur 28 comprend
- un premier solaire 32 mobile en rotation autour d'un axe X et comportant une denture externe 32a,
- des premiers satellites 34 répartis autour de l'axe X et engrenés avec la denture externe 32a du premier solaire 32, ces premiers satellites 34 étant mobiles en rotation autour d'axes Y parallèles à l'axe X et étant portés par un premier porte-satellites 36 mobile en rotation autour de l'axe X, et
- une couronne 38 fixe engrenée avec les satellites 34.

Le réducteur 28 comprend en outre :
- des seconds satellites 46 répartis autour de l'axe X et engrenés avec une couronne 38 et avec une denture externe 36a du premier porte-satellites 36, ces seconds satellites 46 étant mobiles en rotation autour d'axes Z parallèles à l'axe X et étant portés par un second porte-satellites 48 mobile en rotation autour de l'axe X.

Dans l'exemple représenté, le solaire 32 comprend un arbre 32c qui peut être celui du moteur 20 ou qui peut être relié à l'arbre du moteur 20, et un pignon comportant à sa périphérie externe la denture externe 32a.

Le réducteur 28 est ici du type à double étage, c'est-à-dire que les premiers et seconds satellites 34, 46 sont chacun ici du type à double étage et comprend deux dentures 34a, 34b, 46a, 46b indépendantes.

Les premiers satellites 34 comprennent une première denture 34a engrenée avec la denture 32a du solaire 32, et une seconde denture 34b engrenée avec une première denture 52 de la couronne 38. La première denture 34a a ici un diamètre et/ou un nombre de dents supérieur à celui de la seconde denture 34b. La denture 34a est située du côté de l'arbre 32c et donc du moteur électrique 20, et la denture 34b est donc située du côté opposé, c'est-à-dire du côté de la roue 12.

Le premier porte-satellites 36 comprend ou porte des axes physiques 36b de support voire de guidage des premiers satellites 34. Le premier porte-satellites 36 comprend en outre un arbre 36c ou une portion d'arbre relié à un pignon comportant à sa périphérie externe la denture externe 36a.

Les seconds satellites 46 comprennent une première denture 46a engrenée avec la denture 36a du premier porte-satellites 36 formant un second solaire, et une seconde denture 46b engrenée avec une seconde denture 54 de la couronne 38. La première denture 46a a ici un diamètre et/ou un nombre de dents supérieur à celui de la seconde denture 46b. La denture 46a est située du côté de la roue 12, et la denture 46b est donc située du côté opposé, c'est-à-dire du côté du moteur 20.

Dans l'exemple représenté, les dentures internes 52, 54 sont portées par une même couronne 38. En variante, elles pourraient être portées par des couronnes différentes. La couronne 38 est fixe est donc destinée à être fixée à un stator du dispositif 10.

Le second porte-satellites 48 comprend ou portent des axes physiques 48b de support voire de guidage des seconds satellites 46. Le second porte-satellites 48 comprend en outre un arbre 46c ou une portion d'arbre qui est destiné à être relié à la jante 16 de la roue 12.

Comme on le voit à la figure 4, les arbres 32c, 36c, 46c sont centrés et guidés en rotation autour de l'axe X par des paliers 50.

Les axes Y et Z sont ici situés respectivement sur des circonférences C1, C2 de même diamètre D3, D4. En variante, les diamètres D3, D4 de ces circonférences C1, C2 pourraient être différents.

Les dentures 34a, 34b, 32a sont de n'importe quel type et par exemple en chevron. Les dentures 46a, 46b, 36a sont de n'importe quel type et de préférence en chevron. Les dentures 52, 54 sont de préférence en hélice.

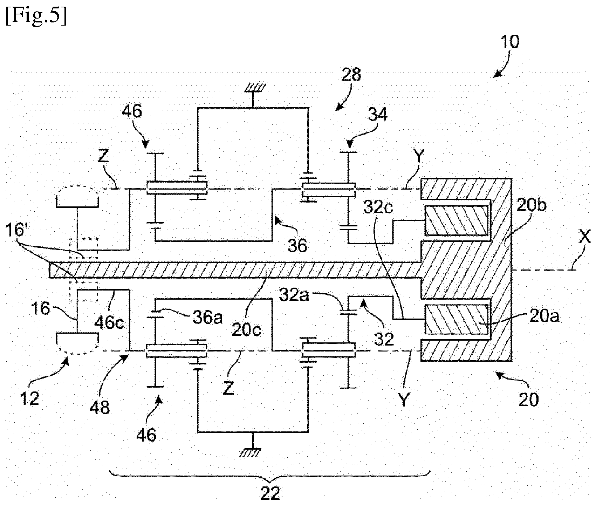

La figure 5 montre un dispositif 10 d'entrainement d'une roue 12 d'un train d'atterrissage d'aéronef, comportant le réducteur 28 de la figure 4.

Le moteur 20 du dispositif 10 comprend un rotor 20a et un stator 20b. Le rotor 20a a ici une forme annulaire et est relié à l'arbre 32c. Le stator 20b a une forme annulaire et s'étend autour du rotor 20a et aussi sur un côté du rotor 20a opposé au réducteur 28.

L'arbre 46c est relié à la jante 16 de la roue 12. Cette liaison peut être faite par un système de débrayage 16' qui est apte à adopter deux positions : une première position dans laquelle l'arbre de sortie du réducteur 28, et en particulier l'arbre 56c, est accouplé à la jante 16 ou à l'arbre de la jante, et une seconde position dans laquelle cet arbre de sortie est désaccouplé de la jante 16 qui est alors en roue libre.

Le stator 20b du moteur 20 comprend une tige 20c qui est centrée sur l'axe X et qui s'étend le long de l'axe X en traversant successivement le réducteur 28 et la jante 16.

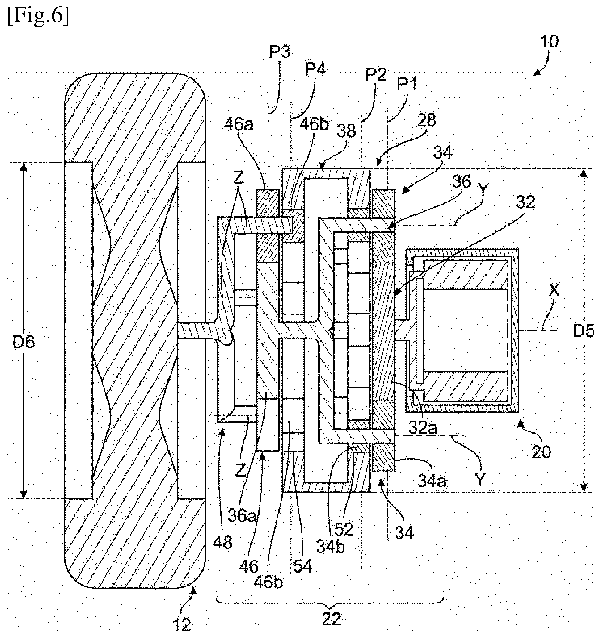

La figure 6 montre une variante de réalisation d'un dispositif 10 d'entrainement d'une roue 12 d'un train d'atterrissage d'aéronef selon l'invention.

La description qui précède faite en relation avec les figures 4 et 5 s'appliquent au réducteur 28 de la figure 6.

On constate à la figure 6 que les dentures 32a et 34a sont situées dans un même plan P1 perpendiculaire à l'axe X. Les dentures 34b et 52 sont situées dans un même plan P2 perpendiculaire à l'axe X.

Les dentures 46a et 36b sont situées dans un même plan P3 perpendiculaire à l'axe X. Les dentures 46b et 54 sont situées dans un même plan P4 perpendiculaire à l'axe X.

La couronne 38 est disposée entre les plans P1 et P3. La couronne 38 a un diamètre externe D5 qui définit le diamètre externe du réducteur 28 et qui est de préférence inférieur au diamètre externe D6 de la jante 16 de façon à pouvoir loger axialement une partie du réducteur 28 dans la jante 16.

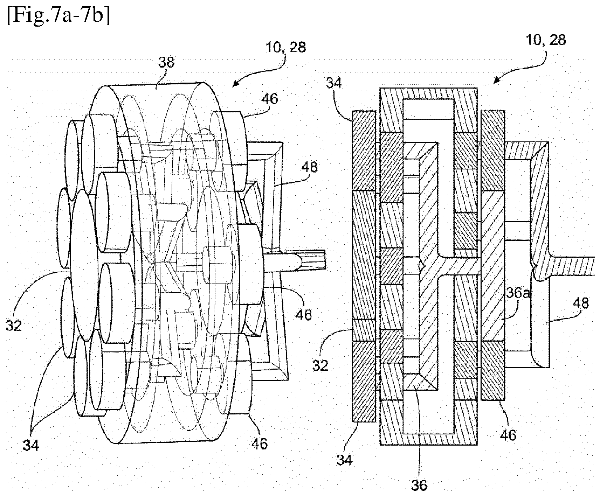

Les figures 7a et 7b montrent une autre variante de réalisation d'un dispositif 10 d'entrainement d'une roue 12 d'un train d'atterrissage d'aéronef selon l'invention.

La description qui précède faite en relation avec les figures 4 à 6 s'applique au réducteur 28 des figures 7a et 7b.

On constate que le nombre de premiers satellites 34, qui est ici de huit, est supérieur au nombre de seconds satellites 46, qui est ici de cinq.

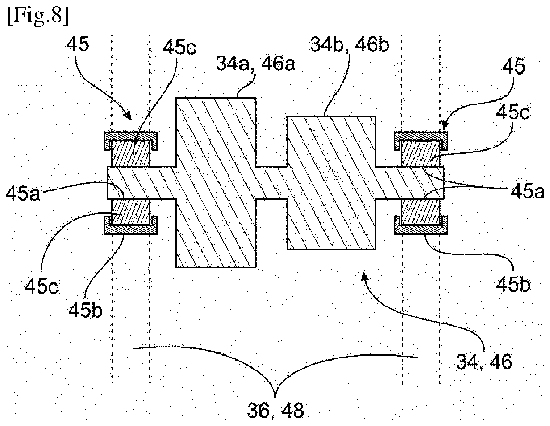

La figure 8 montre un exemple de guidage des satellites 34, 46 du réducteur 28. Les satellites 34, 46 sont guidés par des paliers 45 à roulement qui sont ici plus particulièrement des paliers à rouleaux. Les paliers 45 de guidage de chaque satellite 34, 46 sont au nombre de deux et sont montés autour des extrémités longitudinales de ce satellite, entre ces extrémités et le porte-satellites 36, 48. Chacun des paliers 45 comprend une bague interne 45a portée par le satellite 34, 46 ou intégrée à ce dernier, et une bague externe 45b portée par le porte-satellites 34, 48. Les rouleaux 45c sont montés entre les bagues 45a, 45b.

On constate dans la figure 8 que les dentures 34a, 46a des satellites 34, 46 sont situées entre les paliers 45. Ce montage permet d'équilibrer au mieux les moments appliqués sur les satellites 34 par les engrènements.

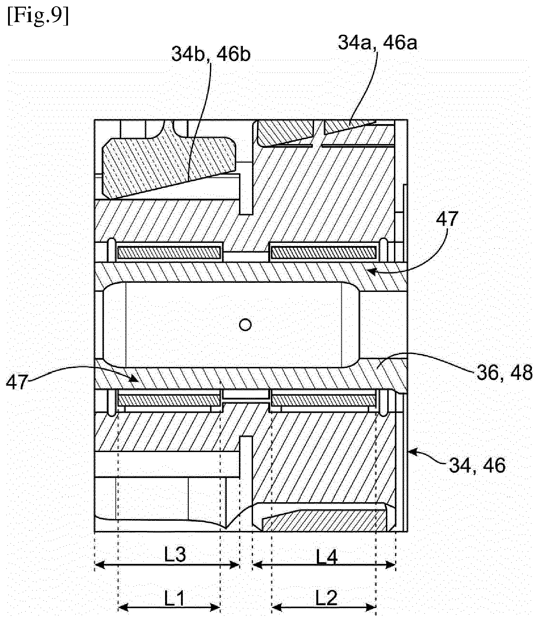

En variante et comme représenté à la figure 9, les satellites 34, 46 sont guidés par des paliers 47 à aiguilles. Ces paliers 47 sont au nombre de deux et sont montés radialement à l'intérieur des satellites 34, 46. Chacun des paliers 47 est aligné radialement avec une des dentures 34a, 46a du satellite 34, 46. Ce montage permet de réduire l'encombrement axial.

Chacun des paliers 47 peut avoir une longueur ou dimension axiale L1, L2 mesurée le long de l'axe Y ou Z, qui représente au moins 80% de la longueur ou dimension axiale L3, L4 de la denture 34a, 46a correspondante.

Dans encore une autre variante non représentée, les paliers de guidage des satellites 34, 46 sont des paliers lisses ou paliers hydrodynamiques.

Le réducteur 28 tel que décrit dans ce qui précède permet un grand rapport de réduction par rapport aux réducteurs de la technique antérieure, et a un faible encombrement, ces deux paramètres étant importants pour l'utilisation de ce réducteur dans un dispositif d'entraînement d'au moins une roue d'un train d'atterrissage d'aéronef.

## Revendications

1. Réducteur mécanique de vitesse (28) pour un dispositif (10) d'entraînement d'au moins une roue (12) d'un train d'atterrissage (14) d'aéronef, ce réducteur comportant :
- un premier solaire (32) mobile en rotation autour d'un axe X et comportant une denture externe (32a),
- des premiers satellites (34) répartis autour de l'axe X et engrenés avec la denture externe (32a) du premier solaire (32), ces premiers satellites (34) étant mobiles en rotation autour d'axes Y parallèles à l'axe X et étant portés par un premier porte-satellites (36) mobile en rotation autour de l'axe X,
- une couronne (38) fixe engrenée avec les satellites (34),
- des seconds satellites (46) répartis autour de l'axe X et engrenés avec la couronne (38) et avec une denture externe (36a) dudit premier porte-satellites (36), ces seconds satellites (46) étant mobiles en rotation autour d'axes Z parallèles à l'axe X et étant portés par un second porte-satellites (48) mobile en rotation autour de l'axe X, où
- les premiers satellites (34) comportent chacun une première denture externe (34a) engrenée avec la denture externe (32a) du premier solaire (32), et les seconds satellites (46) comportent chacun une première denture externe (46a) engrenée avec la denture externe (36a) du premier porte-satellites (36), **caractérisé en ce que** les premiers satellites (34) comportent aussi une seconde denture externe (34b) engrenée avec une première denture interne (52) de la couronne (38), les première et seconde dentures (34a, 34b) de chacun des premiers satellites (34) ayant des diamètres différents et/ou des nombres de dents différents, et **en ce que** les seconds satellites (46) comportent aussi une seconde denture externe (46a) engrenée avec une seconde denture interne (54) de ladite couronne (38), les première et seconde dentures (46a, 46b) de chacun des seconds satellites (34, 46) ayant des diamètres différents et/ou des nombres de dents différents.

2. Réducteur (28) selon la revendication 1, dans lequel les axes Y sont situés sur une première circonférence (C1) et les axes Z sont situés sur une seconde circonférence (C2), les première et seconde circonférences (C1, C2) ayant des diamètres (D1, D2) différents.

3. Réducteur (28) selon la revendication 1, dans lequel les axes Y sont situés sur une première circonférence (C1) et les axes Z sont situés sur une seconde circonférence (C2), les première et seconde circonférences (C1, C2) ayant des diamètres (D1, D2) identiques.

4. Réducteur (28) selon l'une des revendications précédentes, dans lequel le nombre de premiers satellites (34) est égal au nombre de seconds satellites (46).

5. Réducteur (28) selon l'une des revendications 1 à 3, dans lequel le nombre de premiers satellites (34) est différent du nombre de seconds satellites (46).

6. Réducteur (28) selon l'une des revendications précédentes, dans lequel les dentures (34a, 34b, 46a, 46b) des premiers et seconds satellites (34, 46) sont en chevron et les dentures (52, 54) de la couronne (38) sont en hélice.

7. Réducteur (28) selon l'une des revendications précédentes, dans lequel les premiers et seconds satellites (34, 46) sont guidés en rotation par des paliers (45, 47) qui sont situés aux extrémités longitudinales des satellites (34, 46) ou radialement à l'intérieur des dentures (34a, 34b, 46a, 46b) de ces satellites.

8. Dispositif (10) d'entraînement d'au moins une roue (12) d'un train d'atterrissage d'aéronef, ce dispositif comportant :
- au moins une roue (12) de train d'atterrissage, cette roue (12) comportant une jante (16) ayant un axe de rotation (X),
- un moteur (20) électrique comportant un arbre,
- un système de transmission mécanique (22) entre l'arbre du moteur (20) et la jante (16), ce système de transmission mécanique (22) comprenant un réducteur mécanique de vitesse (28) selon l'une des revendications précédentes.

## Patentansprüche

1. Mechanisches Untersetzungsgetriebe (28) für eine Antriebsvorrichtung (10) für mindestens ein Rad (12) eines Luftfahrzeugfahrwerks (14), wobei dieses Untersetzungsgetriebe umfasst:
- ein erstes Sonnenrad (32), das um eine X-Achse drehbeweglich ist und eine Außenverzahnung (32a) umfasst,
- erste Planetenräder (34), die um die X-Achse verteilt sind und mit der Außenverzahnung (32a) des ersten Sonnenrads (32) kämmen, wobei diese ersten Planetenräder (34) um zur X-Achse parallele Y-Achsen drehbeweglich sind und von einem ersten Planetenradträger (36), der um die X-Achse drehbeweglich ist, getragen werden,
- eine feste Krone (38), das mit den Planetenrädern (34) kämmt,
- zweite Planetenräder (46), die um die X-Achse verteilt sind und mit der Krone (38) und mit einer Außenverzahnung (36a) des ersten Planetenradträgers (36) kämmen, wobei diese zweiten Planetenräder (46) um zur X-Achse parallele Z-Achsen drehbeweglich sind und von einem zweiten Planetenradträger (48), der um die X-Achse drehbeweglich ist, getragen werden, wobei
- die ersten Planetenräder (34) jeweils eine erste Außenverzahnung (34a) umfassen, die mit der Außenverzahnung (32a) des ersten Sonnenrads (32) kämmt, und die zweiten Planetenräder (46) jeweils eine erste Außenverzahnung (46a) umfassen, die mit der Außenverzahnung (36a) des ersten Planetenradträgers (36) kämmt, **dadurch gekennzeichnet, dass** die ersten Planetenräder (34) auch eine zweite Außenverzahnung (34b) umfassen, die mit einer ersten Innenverzahnung (52) der Krone (38) kämmt, wobei die erste und die zweite Verzahnung (34a, 34b) jedes der ersten Planetenräder (34) unterschiedliche Durchmesser und/oder unterschiedliche Zähnezahlen aufweisen, und dadurch, dass die zweiten Planetenräder (46) auch eine zweite Außenverzahnung (46a) umfassen, die mit einer zweiten Innenverzahnung (54) der Krone (38) kämmt, wobei die erste und die zweite Verzahnung (46a, 46b) jedes der zweiten Planetenräder (34, 46) unterschiedliche Durchmesser und/oder unterschiedliche Zähnezahlen aufweisen.

2. Untersetzungsgetriebe (28) nach Anspruch 1, wobei die Y-Achsen auf einem ersten Umfang (C1) liegen und die Z-Achsen auf einem zweiten Umfang (C2) liegen, wobei der erste und der zweite Umfang (C1, C2) unterschiedliche Durchmesser (D1, D2) aufweisen.

3. Untersetzungsgetriebe (28) nach Anspruch 1, wobei die Y-Achsen auf einem ersten Umfang (C1) liegen und die Z-Achsen auf einem zweiten Umfang (C2) liegen, wobei der erste und der zweite Umfang (C1, C2) identische Durchmesser (D1, D2) aufweisen.

4. Untersetzungsgetriebe (28) nach einem der vorstehenden Ansprüche, wobei die Anzahl von ersten Planetenrädern (34) gleich der Anzahl von zweiten Planetenrädern (46) ist.

5. Untersetzungsgetriebe (28) nach einem der Ansprüche 1 bis 3, wobei sich die Anzahl von ersten Planetenrädern (34) von der Anzahl von zweiten Planetenrädern (46) unterscheidet.

6. Untersetzungsgetriebe (28) nach einem der vorstehenden Ansprüche, wobei die Verzahnungen (34a, 34b, 46a, 46b) der ersten und der zweiten Planetenräder (34, 46) Pfeilverzahnungen sind und die Verzahnungen (52, 54) der Krone (38) Schrägverzahnungen sind.

7. Untersetzungsgetriebe (28) nach einem der vorstehenden Ansprüche, wobei die ersten und die zweiten Planetenräder (34, 46) von Lagern (45, 47) drehgeführt werden, die an den Längsenden der Planetenräder (34, 46) oder radial innerhalb der Verzahnungen (34a, 34b, 46a, 46b) dieser Planetenräder liegen.

8. Vorrichtung (10) zum Antrieb mindestens eines Rades (12) eines Luftfahrzeugfahrwerks, wobei diese Vorrichtung umfasst:
- mindestens ein Rad (12) des Fahrwerks, wobei dieses Rad (12) eine Felge (16), die eine Drehachse (X) aufweist, umfasst,
- einen Elektromotor (20), der eine Welle umfasst,
- ein mechanisches Kraftübertragungssystem (22) zwischen der Welle des Motors (20) und der Felge (16), wobei dieses mechanische Kraftübertragungssystem (22) ein mechanisches Untersetzungsgetriebe (28) nach einem der vorstehenden Ansprüche umfasst.

## Claims

1. A mechanical speed reducer (28) for a device (10) for driving at least one wheel (12) of an aircraft landing gear (14), this reducer comprising:
- a first sun gear (32) movable in rotation about an axis X and comprising an external toothing (32a),
- first planet gears (34) distributed around the axis X and meshed with the external toothing (32a) of the first sun gear (32), these first planet gears (34) being movable in rotation around axes Y parallel to the axis X and being carried by a first planet carrier (36) movable in rotation around the axis X,
- a stationary ring gear (38) meshed with the planet gears (34),
- second planet gears (46) distributed around the axis X and meshed with the ring gear (38) and with an external toothing (36a) of said first planet carrier (36), these second planet gears (46) being movable in rotation around axes Z parallel to the axis X and being carried by a second planet carrier (48) movable in rotation around the axis X,
wherein:
- the first planet gears (34) each comprise a first external toothing (34a) meshed with the external toothing (32a) of the first sun gear (32), and the second planet gears (46) each comprise a first external toothing (46a) meshed with the external toothing (36a) of the first planet carrier (36),
**characterized in that** the first planet gears (34) further comprise a second external toothing (34b) meshed with a first internal toothing (52) of the ring gear (38), the first and second toothings (34a, 34b) of each of the first planet gears (34) having different diameters and/or different numbers of teeth, and **in that** the second planet gears (46) further comprise a second external toothing (46a) meshed with a second internal toothing (54) of said ring gear (38), the first and second toothings (46a, 46b) of each of the second planet gears (34, 46) having different diameters and/or different numbers of teeth.

2. The reducer (28) according to claim 1, wherein the axes Y are located on a first circumference (C1) and the axes Z are located on a second circumference (C2), the first and second circumferences (C1, C2) having different diameters (D1, D2).

3. The reducer (28) according to claim 1, wherein the axes Y are located on a first circumference (C1) and the axes Z are located on a second circumference (C2), the first and second circumferences (C1, C2) having identical diameters (D1, D2).

4. The reducer (28) according to one of the preceding claims, wherein the number of first planet gears (34) is equal to the number of second planet gears (46).

5. The reducer (28) according to one of claims 1 to 3, wherein the number of first planet gears (34) is different from the number of second planet gears (46).

6. The reducer (28) according to one of the preceding claims, wherein the toothings (34a, 34b, 46a, 46b) of the first and second planet gears (34, 46) are herringbone-shaped and the toothings (52, 54) of the ring gear (38) are helical.

7. The reducer (28) according to one of the preceding claims, wherein the first and second planet gears (34, 46) are guided in rotation by bearings (45, 47) which are located at the longitudinal ends of the planet gears (34, 46) or radially inside the toothings (34a, 34b, 46a, 46b) of these planet gears.

8. A device (10) for driving at least one wheel (12) of an aircraft landing gear, this device comprising:
- at least one landing gear wheel (12), this wheel (12) comprising a rim (16) having an axis of rotation (X),
- an electric motor (20) comprising a shaft,
- a mechanical transmission system (22) between the shaft of the motor (20) and the rim (16), this mechanical transmission system (22) comprising a mechanical speed reducer (28) according to one of the preceding claims.
